# EUROPÄISCHE PATENTSCHRIFT

(11) **EP 2 736 137 B1**
(45) Veröffentlichungstag und Bekanntmachung des Hinweises auf die Patenterteilung: **24.08.2016**
(21) Anmeldenummer: 13190490.6
(22) Anmeldetag: 28.10.2013
(51) Int. Cl.: H02G 3/08

(54) **Vorrichtung zum Abdecken und/oder Abdichten eines Wanddurchbruchs**
Device for covering and/or sealing a wall break
Dispositif de recouvrement et/ou d'isolation étanche d'un passage de mur

(30) Priorität: 26.11.2012 DE 102012022973
(43) Veröffentlichungstag der Anmeldung: 28.05.2014
(73) Patentinhaber: Murrplastik Systemtechnik GmbH, 71570 Oppenweiler (DE)
(72) Erfinder:
(74) Vertreter: Patentanwälte Bregenzer und Reule Partnerschaftsgesellschaft mbB

(56) Entgegenhaltungen:
- EP-A1- 1 363 376
- EP-A1- 1 744 425
- EP-A2- 2 106 006
- EP-A2- 2 493 041
- FR-A1- 2 126 194

## Beschreibung

Die Erfindung betrifft eine Vorrichtung zum Abdecken und/oder Abdichten eines zur Durchführung von mindestens einer Leitung bestimmten Wanddurchbruchs gemäß Oberbegriff des Anspruchs 1.

Vorrichtungen dieser Art dienen meist dazu, Kabel durch einen Wanddurchbruch, beispielsweise einen Durchbruch in einer Wand eines Schaltschranks, durchzuführen Die Vorrichtungen haben vor allem die Aufgabe, den Wanddurchbruch nach dem Durchführen der Kabel abzudecken und abzudichten sowie eine Zugentlastung zu schaffen. Der Wanddurchbruch ist meist rechteckig ausgebildet.

Aus der DE-197 31 448 C2 ist eine Vorrichtung zur Durchführung von Kabeln bekannt, die sich in der Praxis bereits vielfach bewährt hat. Diese Vorrichtung weist einen Rahmen mit für die Durchführung von Kabeln bestimmten Rahmenöffnungen auf, in dem eine Sandwichkonstruktion mit einer Platte aus elastischem Material angeordnet ist. Die Platte aus elastischem Material ist mit Löchern versehen, die jeweils über einer der Rahmenöffnungen angeordnet sind und die beim Durchführen eines Kabels aufgeweitet werden, so dass sich der Umfangsrand eines Lochs unter Erzielung einer Dichtfunktion um das durchgeführte Kabel legt. Werden jedoch nicht alle Rahmenöffnungen mit einem Kabel bestückt, so bilden die nicht durch Kabel ausgefüllten Löcher in der elastomeren Platte kleine undichte Stellen. Zudem ist der Zusammenbau aus mehreren Schichten in Sandwichbauweise aufwändig.

Aus der DE 20 2004 006 065 U1 und der EP 0 986 155 B1 ist jeweils eine Kabeldurchführung Art bekannt, die eine eine Wandöffnung verschließende, an die Wand angespritzte Tülle zur Durchführung eines Kabels aufweist. Vor dem Durchführen des Kabels muss die Spitze der Tülle mit einem geeigneten Werkzeug abgeschnitten werden.

Aus der EP 1363376 ist eine Kabeldurchführung nach dem Oberbegriff des Anspruchs 1 bekannt.

Aus der FR 2 126 194 A1 ist eine Kabeldurchführung der eingangs genannten Art bekannt.

Es ist Aufgabe der Erfindung, eine Vorrichtung der eingangs genannten Art derart weiterzubilden, dass sie einfacher zu handhaben ist.

Die Aufgabe wird erfindungsgemäß durch eine Vorrichtung mit den Merkmalen des Anspruchs 1 gelöst. Vorteilhafte Weiterbildungen der Erfindung sind Gegenstand der abhängigen Ansprüche.

Die Erfindung bezieht sich auf Vorrichtungen, die eine oder mehrere Rähmenöffnüngen aufweisen, so dass eine oder mehrere Leitungen durchgeführt werden können. In bzw. an mindestens einer Rahmenöffnung und vorzugsweise in bzw. an allen Rahmenöffnungen ist eine Trennwand aus elastomerem Material angeordnet, die mit dem Rahmen stoffschlüssig verbunden ist. Die stoffschlüssige Verbindung von Trennwand und Rahmen erlaubt die Herstellung der Vorrichtung in einem Arbeitsgang, beispielsweise mittels eines Zweikomponenten-Spritzgussverfahrens. Ein aufwändiges Zusammensetzen mehrerer Bauteile ist dann nicht notwendig. Dabei verschließt die mindestens eine Trennwand die jeweilige Rahmenöffnung vollständig. Durch diese Maßnahme wird eine hohe Dichtigkeit der Vorrichtung auch dann erreicht, wenn durch die betreffende Rahmenöffnung keine Leitung durchgeführt ist. Insbesondere können Dichtigkeiten von IP54 oder besser erzielt werden. Das Durchführen einer Leitung durch die Trennwand wird dadurch erleichtert, dass diese einen zentralen Bereich geringerer Dicke aufweist, der von einem äußeren Bereich größerer Dicke umgeben ist.

Zum Durchführen der Leitung muss die Trennwand durchstoßen werden. Dies kann insbesondere mittels der Leitung selbst erfolgen. Zu diesem Zwecke weist die mindestens eine Trennwand eine Dicke von maximal 1,5 mm, vorzugsweise von maximal 1,2 mm auf. Dabei weist der zentrale Bereich eine um mindestens 0,1 mm und vorzugsweise um mindestens 0,2 mm geringere Dicke auf als der äußere Bereich. In der Praxis werden Dicken von 0,8 mm im zentralen Bereich und 1 mm im äußeren Bereich bevorzugt. Die Trennwand ist dann so dünn, dass sie mit einem Kabel durchstoßen werden kann, wobei insbesondere der zentrale Bereich reißt, während sich der äußere Bereich die Rahmenöffnung abdichtend um die durchgeführte Leitung legt. Hierzu ist der zentrale Bereich zweckmäßig so in seiner Größe an eine durchzuführende Leitung angepasst, dass der Durchmesser der Leitung geringfügig größer ist als der Durchmesser des zentralen Bereichs.

Zur Verbesserung der Dichtigkeit zwischen dem Rahmen und dem Rand des Wanddurchbruchs ist ersterer zweckmäßig mit einer an seiner zur Anlage an den Rand des Wanddurchbruchs bestimmten Seite umlaufenden Dichtung versehen, die aus einem thermoplastischen Elastomer hergestellt ist und mit dem Rahmen stoffschlüssig verbunden ist. Die Dichtung läuft um die Rahmenöffnung beziehungsweise die Rahmenöffnungen um und verbessert die Dichtwirkung zwischen dem Rahmen und der Wand.

Zur Befestigung an der Wand weist der Rahmen zweckmäßig Schraubenlöcher zum Durchführen von Befestigungsschrauben auf. Diese sind jeweils mittels eines stoffschlüssig mit dem Rahmen verbundenen Stopfens verschlossen, so dass auch in diesem Bereich Undichtigkeiten vermieden werden, wenn Befestigungsschrauben weggelassen werden. Zudem werden die Befestigungsschrauben beim Befestigen durch die Stopfen durchgeführt und dichten dabei die Schraubenlöcher ab.

Zweckmäßig bestehen die mindestens eine Trennwand, die Dichtung und die Stopfen aus demselben thermoplastischen Elastomer. Die gesamte Vorrichtung kann dann in dem bereits genannten Zweikomponenten-Spritzgussverfahren durch Anspritzen der Trennwand beziehungsweise Trennwände, der Dichtung und der Stopfen an den Rahmen unter Ausbildung stoffschlüssiger Verbindungen in einem Arbeitsgang hergestellt werden.

Zweckmäßig weisen die Stopfen eine geringere Dicke auf als der Rahmen im Bereich der Schraubenlöcher und sind im Abstand zu der zur Anlage an den Rand des Wanddurchbruchs bestimmten Fläche angeordnet. Sie dichten dann die Schraubenlöcher hinreichend gut ab, ermöglichen aber dennoch ein einfaches Durchführen der Befestigungsschrauben. Es ist aber auch möglich, dass in jedes Schraubenloch ein aus der zur Anlage an den Rand des Wanddurchbruchs bestimmten Fläche herausragender Gewindestift bis maximal zur Anlage am jeweiligen Stopfen eingeschraubt ist. Der Gewindestift übernimmt damit die Funktion einer Befestigungsschraube, ohne den Stopfen zu durchstoßen, so dass das Schraubenloch dicht bleibt.

Am Rahmen kann zudem eine gelochte Platte befestigt sein, wobei über jeder Rahmenöffnung jeweils ein zum Durchführen einer Leitung bestimmtes Loch der Platte angeordnet ist, und wobei die Platte an jedem Loch Mittel zur Zugentlastung der jeweiligen Leitung aufweist. Zwar bildet jede elastomere Wand bis zu einem gewissen Grad eine Zugentlastung für eine durchgeführte Leitung. Wird auf die Leitung jedoch ein stärkerer Zug ausgeübt, so reicht diese Zugentlastung oftmals nicht aus. Dem wird durch Vorsehen von zusätzlichen Mitteln zur Zugentlastung begegnet. Die Platte ist vorzugsweise so angeordnet, dass sich der Rand des Wanddurchbruchs zwischen ihr und dem Rahmen befindet.

Im Folgenden wird die Erfindung anhand eines in der Zeichnung schematisch dargestellten Ausführungsbeispiels näher erläutert. Es zeigen
- Fig. 1: eine Leitungsdurchführungsvorrichtung in perspektivischer Vorderansicht;

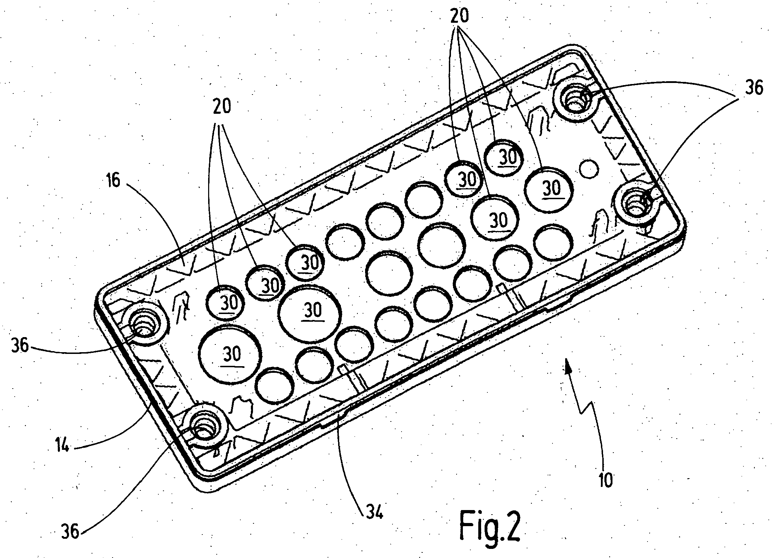

- Fig. 2: die Vorrichtung gemäß Fig. 1 in perspektivischer Rückansicht;
- Fig. 3: die Einzelteile der Vorrichtung gemäß Fig. 1 und 2;
- Fig. 4: eine Detaildarstellung der Vorrichtung gemäß Fig. 1 bis 3 mit eingesetzten Gewindestiften;
- Fig. 5: eine Schnittdarstellung der Vorrichtung gemäß Fig. 4 im Bereich der Gewindestifte und
- Fig. 6: eine Rückansicht der Vorrichtung gemäß Fig. 1 bis 3 mit auf der Rückseite aufgesetzter Lochplatte.

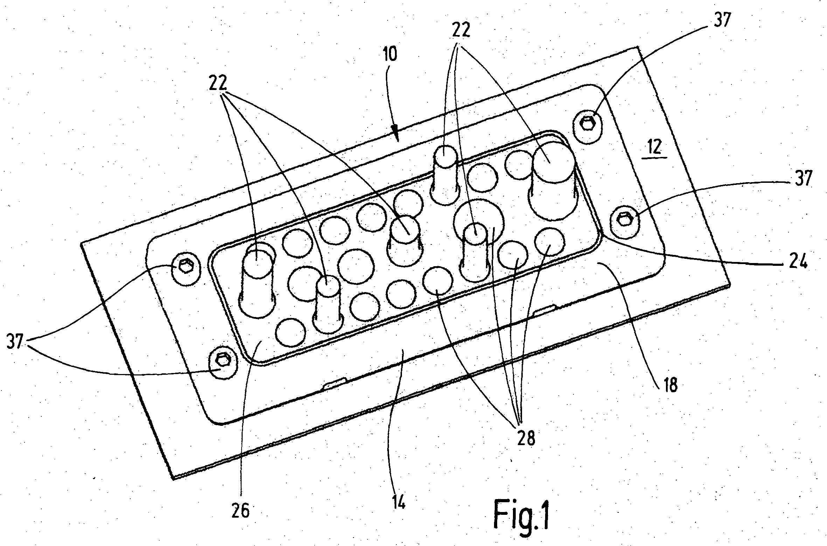

Die in der Zeichnung dargestellte Kabeldurchführungsvorrichtung 10 ist, wie in Fig. 1 beispielhaft schematisch gezeigt, dazu bestimmt, einen Durchbruch in einer Wand 12 abzudecken. Sie weist einen starren Rahmen 14 aus einem thermoplastischen Kunststoff, im gezeigten Ausführungsbeispiel aus Polypropylen, auf, der eine Vielzahl von sich von einer Rückseite 16 bis zu einer Vorderseite 18 erstreckenden Rahmenöffnungen 20 aufweist, durch die, wie in Fig. 1 beispielhaft angedeutet, Kabel 22 durchgeführt werden können.

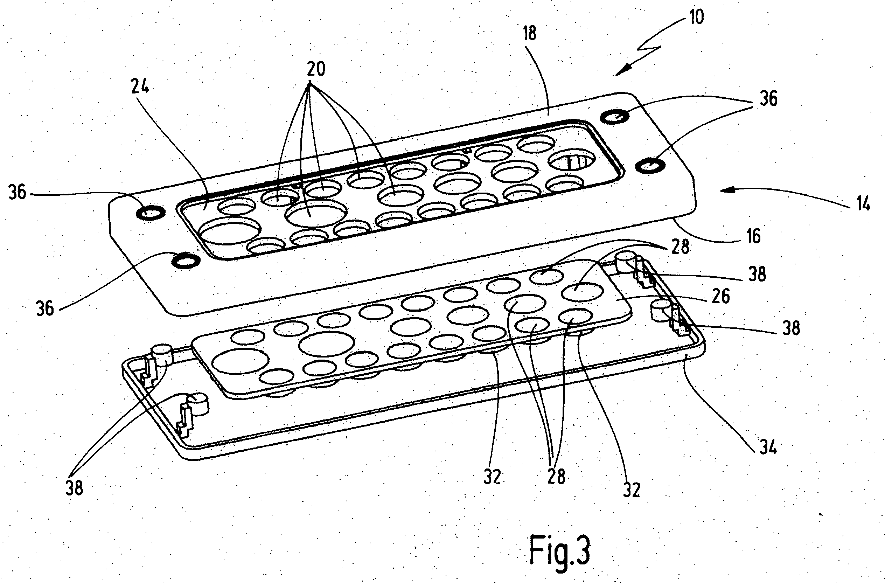

In einer Vertiefung 24 an der Vorderseite 18, in die die Rahmenöffnungen 20 münden, befindet sich eine Matte 26 aus einem thermoplastischen Elastomer, die die Vertiefung 24 vollständig und in voller Höhe auskleidet und Trennwände 28 aufweist, die die Rahmenöffnungen 20 vollständig verschließen. Jede der Trennwände 28 weist einen zentralen Bereich 30 mit einer der Tiefe der Vertiefung 24 entsprechenden Dicke von 0,8 mm auf, der von einem äußeren Bereich 32 umrandet wird, der sich mit einer Dicke von 1 mm ein Stück weit in die betreffende Rahmenöffnung 20 hinein erstreckt und deren Umfangsrand auskleidet. Die Trennwände 28 sind somit an jeder Stelle dünner ausgeführt als der Rahmen 14. Die Matte 26 ist dabei stoffschlüssig mit dem Rahmen 14 verbunden, indem beide gemeinsam in einem Arbeitsschritt durch Zweikomponenten-Spritzgießen hergestellt worden sind. Die in Fig. 3 dargestellte Heraustrennung der Matte 26 aus dem Rahmen 14 dient somit lediglich der Veranschaulichung, da die Matte 26 aus dem Rahmen 14 nicht herausgetrennt werden kann, ohne sie zu zerstören. Die Trennwände 28 sind in ihrer Dicke so bemessen, dass sie mittels eines Kabels 22 in ihrem zentralen Bereich 30 durchstoßen werden können, während sich der äußere Bereich 32 dichtend rings um das Kabel 22 legt. Ist durch eine der Rahmenöffnungen 20 kein Kabel durchgeführt, wie dies in Fig. 1 für eine Anzahl der Rahmenöffnungen 20 der Fall ist, so dichtet die die betreffende Rahmenöffnung 20 abdeckende Trennwand 28, sofern sie noch nicht von einem Kabel durchstoßen wurde, die Rahmenöffnung 20 weitestgehend ab.

An der zur Anlage an der Wand 12 bestimmten Rückseite 16 weist der Rahmen 14 einen rings um die Rahmenöffnungen 20 umlaufende Dichtring 34 auf, der aus demselben thermoplastischen Elastomer hergestellt ist wie die Matte 26. Der Dichtring 34 stellt die Dichtigkeit zwischen dem Rahmen 14 und der Wand 12 her, wenn der Rahmen 14 an der Wand 12 festgeschraubt ist. Zu diesem Zweck weist der Rahmen 14 vier außerhalb der Vertiefung 24 angeordnete Schraubenlöcher 36 zur Aufnahme von Befestigungsschrauben 37 auf, die jeweils mittels eines Stopfens 38 verschlossen sind, der aus demselben thermoplastischen Elastomer besteht wie die Matte 26 und der Dichtring 34. Die Stopfen 38 erstrecken sich von der Vorderseite 18 ein Stück weit in die Schraubenlöcher 36 hinein. Sowohl der Dichtring 34 als auch die Stopfen 38 werden in einem Arbeitsgang beim selben Spritzgussprozess stoffschlüssig mit dem Rahmen 14 verbunden, bei dem auch die Matte 26 mit dem Rahmen 14 verbunden wird. Somit dient die Darstellung in Fig. 3, in der der Dichtring 34 und die Stopfen 38 vom Rahmen 14 losgelöst sind, lediglich der Veranschaulichung. Wenn durch die Schraubenlöcher 36 keine Schrauben durchgeführt sind, dichten die Stopfen 38 die Schraubenlöcher 36 ab. Zum Befestigen des Rahmens 14 an der Wand 12 werden die Befestigungsschrauben 37 einfach durch die Stopfen 38 durchgedrückt oder durchgedreht.

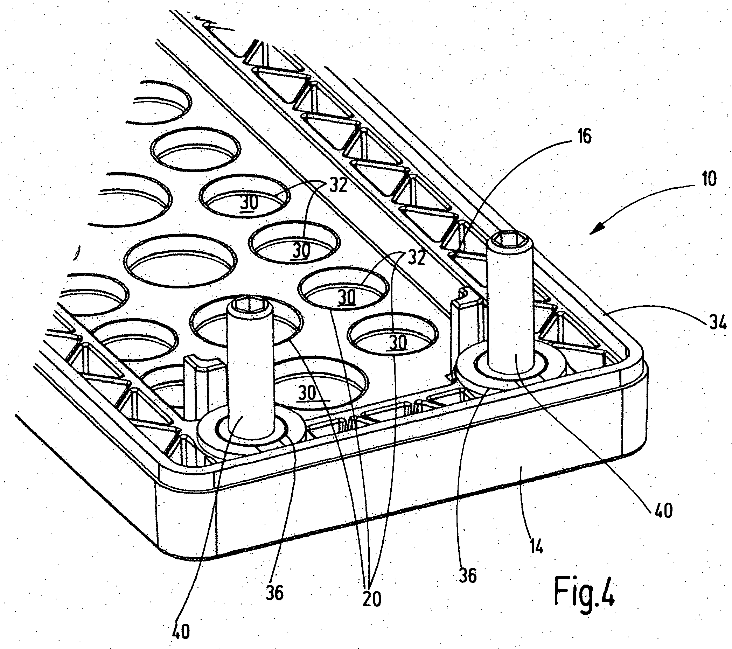

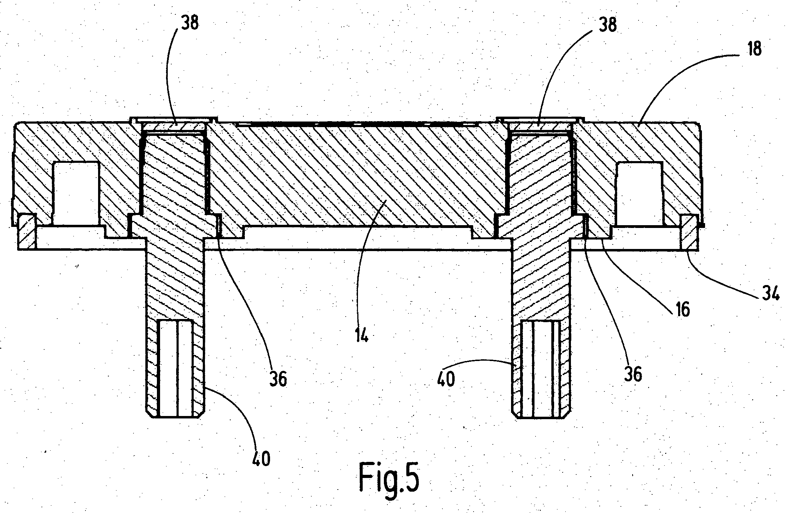

In Fig. 4 und 5 ist eine Möglichkeit gezeigt, den Rahmen 14 ohne Durchtrennen der Stopfen 38 an der Wand 12 zu befestigen. Zu diesem Zweck sind in die mit einem Innengewinde versehenen Schraubenlöcher 36 Gewindestifte 40 eingeschraubt, die sich nicht ganz bis zu den Stopfen 38 erstrecken, aber aus der Rückseite 16 ein Stück weit herausstehen. Die Gewindestifte 40 werden durch Löcher in der Wand 12 durchgesteckt, so dass der Rahmen 14 an der Wand 12 fixiert werden kann.

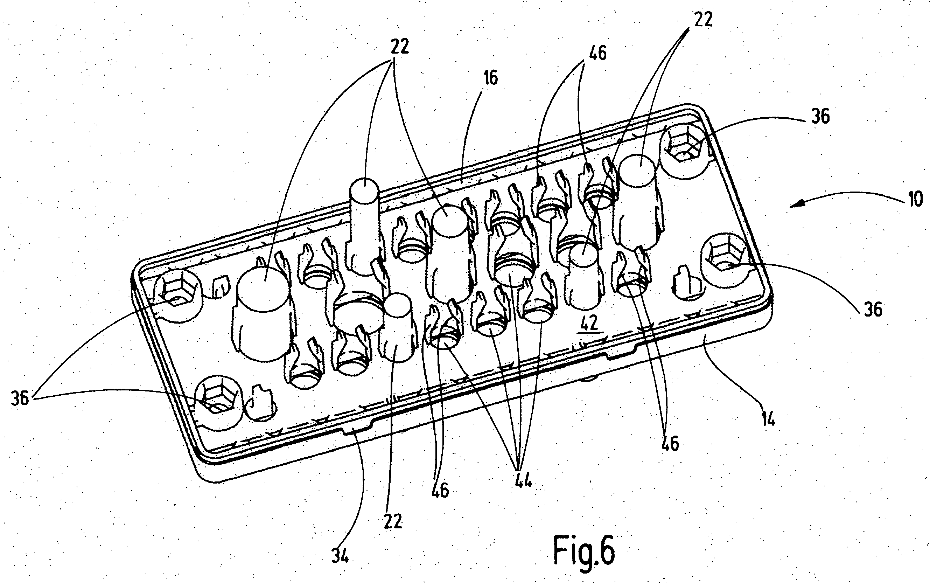

Die in Fig. 6 gezeigte Weiterbildung zeichnet sich durch eine an der Rückseite 16 des Rahmens 14 angeordnete gelochte Platte 42 aus, deren Löcher 44 über den Rahmenöffnungen 20 angeordnet sind und denselben Durchmesser wie die Rahmenöffnungen 20 aufweisen. Die Platte 42 ist ein separates Bauteil und ist am Rahmen 14 befestigt, beispielsweise mittels der Schrauben 37 oder der Gewindestifte 40. An jedem Loch 44 befinden sich paarweise einander gegenüberliegend sich in Längsrichtung der Kabel 22 erstreckende, einstückig an der Platte 42 angeformte Zungen 46, zwischen denen ein durchgeführtes Kabel 22 zur Zugentlastung eingeklemmt wird. Die Platte 42 wird bei der Montage der Vorrichtung 10 auf der anderen Seite der Wand 12 montiert als der Rahmen 14, so dass der Rand des Wanddurchbruchs zwischen dem Rahmen 14 und der Platte 42 angeordnet ist und sich die Platte 42 in einem Abstand zum Rahmen 14 befindet, der der Dicke der Wand 12 entspricht.

Zusammenfassend ist folgendes festzuhalten: Die Erfindung betrifft eine Vorrichtung 10 zum Abdecken und/oder Abdichten eines zur Durchführung von mindestens einer Leitung 22 bestimmten Wanddurchbruchs mit einem am Rand des Wanddurchbruchs befestigbaren starren Rahmen 14, der mindestens eine Rahmenöffnung 20 zur Durchführung einer Leitung 22 aufweist, wobei in und/oder an der mindestens einen Rahmenöffnung 20 eine Trennwand 28 aus elastomerem Material angeordnet ist, die dazu bestimmt ist, eine durch die betreffende Rahmenöffnung 20 durchgeführte Leitung 22 rings zu umschließen, wobei der Rahmen 14 und die Trennwand 28 stoffschlüssig miteinander verbunden sind und wobei die mindestens eine Trennwand 28 die jeweilige Rahmenöffnung 20 vollständig verschließt. Erfindungsgemäß ist vorgesehen, dass die mindestens eine Trennwand 28 einen zentralen Bereich 30 geringerer Dicke aufweist, der von einem äußeren Bereich 32 größerer Dicke umgeben ist.

### Bezugszeichenliste:

- 10: Kabeldurchführungsvorrichtung
- 12: Wand
- 14: Rahmen
- 16: Rückseite
- 18: Vorderseite
- 20: Rahmenöffnung
- 22: Kabel
- 24: Vertiefung
- 26: Matte
- 28: Trennwand
- 30: zentraler Bereich
- 32: äußerer Bereich
- 34: Dichtring
- 36: Schraubenlöcher
- 37: Befestigungsschrauben
- 38: Stopfen
- 40: Gewindestift
- 42: Platte
- 44: Loch
- 46: Zunge

## Patentansprüche

1. Vorrichtung zum Abdecken und/oder Abdichten eines zur Durchführung von mindestens einer Leitung (22) bestimmten Wanddurchbruchs mit einem am Rand des Wanddurchbruchs befestigbaren starren Rahmen (14), der mindestens eine Rahmenöffnung (20) zur Durchführung einer Leitung (22) aufweist, wobei an und/oder in der mindestens einen Rahmenöffnung (20) eine Trennwand (28) aus elastomerem Material angeordnet ist, die dazu bestimmt ist, eine durch die betreffende Rahmenöffnung (20) durchgeführte Leitung (22) rings zu umschließen, wobei die mindestens eine Trennwand (28) die jeweilige Rahmenöffnung (20) vollständig verschließt, und wobei die mindestens eine Trennwand (28) einen zentralen Bereich (30) geringerer Dicke aufweist, der von einem äußeren Bereich (32) größerer Dicke umgeben ist, **dadurch gekennzeichnet, dass** der Rahmen (14) und die Trennwand (28) stoffschlüssig miteinander verbunden sind, dass der zentrale Bereich (30) eine um mindestens 0,1 mm und vorzugsweise um mindestens 0,2 mm geringere Dicke aufweist als der äußere Bereich (32) und dass die mindestens eine Trennwand (28) eine Dicke von maximal 1,5 mm, vorzugsweise von maximal 1,2 mm aufweist

2. Vorrichtung nach Anspruch 1, **dadurch gekennzeichnet, dass** der Rahmen (14) mehrere Rahmenöffnungen (20) zum Durchführen jeweils einer Leitung (22) aufweist, in denen jeweils eine Trennwand (28) aus elastomerem Material angeordnet ist, die dazu bestimmt ist, eine durch die jeweilige Rahmenöffnung (20) durchgeführte Leitung (22) rings zu umschließen, und die mit dem Rahmen (14) stoffschlüssig verbunden ist.

3. Vorrichtung nach Anspruch 1 oder 2, **dadurch gekennzeichnet, dass** der Rahmen (14) aus einem thermoplastischen Kunststoff und die mindestens eine Trennwand (28) aus einem thermoplastischen Elastomer hergestellt ist und dass die mindestens eine Trennwand (28) und der Rahmen (14) mittels eines Zweikomponenten-Spritzgussverfahrens miteinander verbunden sind.

4. Vorrichtung nach einem der vorangehenden Ansprüche, **dadurch gekennzeichnet, dass** der zentrale Bereich (30) so in seiner Größe an eine durchzuführende Leitung (22) angepasst ist, dass der Durchmesser der Leitung (22) geringfügig größer ist als der Durchmesser des zentralen Bereichs (30).

5. Vorrichtung nach einem der vorangehenden Ansprüche, **dadurch gekennzeichnet, dass** der Rahmen (14) an seiner zur Anlage an den wand des Wanddurchbruchs bestimmten Seite (16) mit einer umlaufenden Dichtung (34) versehen ist, die aus einem thermoplastischen Elastomer hergestellt ist und mit dem Rahmen (14) stoffschlüssig verbunden ist.

6. Vorrichtung nach einem der vorangehenden Ansprüche, **dadurch gekennzeichnet, dass** der Rahmen (14) Schraubenlöcher (36) zum Durchführen von Befestigungsschrauben (37) aufweist und dass die Schraubenlöcher (36) jeweils mittels eines stoffschlüssig mit dem Rahmen (14) verbundenen Stopfens (38) verschlossen sind.

7. Vorrichtung nach Anspruch 3, nach Anspruch 5 und nach Anspruch 6, **dadurch gekennzeichnet, dass** die mindestens eine Trennwand (28), die Dichtung (34) und die Stopfen (38) aus demselben thermoplastischen Elastomer hergestellt sind und jeweils mit dem Rahmen (14) mittels des Zweikomponenten-Spritzgussverfahrens verbunden sind.

8. Vorrichtung nach Anspruch 6 oder 7, **dadurch gekennzeichnet, dass** die Stopfen (38) eine geringere Dicke aufweisen als der Rahmen (14) im Bereich der Schraubenlöcher (36) und im Abstand zu der zur Anlage an den Rand des Wanddurchbruchs bestimmten Seite (16) angeordnet sind.

9. Vorrichtung nach Anspruch 8, **dadurch gekennzeichnet, dass** in jedes Schraubenloch (36) ein an der zur Anlage an den Rand des Wanddurchbruchs bestimmten Seite (16) aus dem Rahmen (14) herausragender Gewindestift (40) bis maximal zur Anlage am jeweiligen Stopfen (38) eingeschraubt ist.

10. Vorrichtung nach einem der vorangehenden Ansprüche, **dadurch gekennzeichnet, dass** am Rahmen (14) eine gelochte Platte (42) befestigt ist, wobei über jeder Rahmenöffnung (20) jeweils ein zum Durchführen einer Leitung (22) bestimmtes Loch (44) der Platte (42) angeordnet ist, und wobei die Platte (42) an jedem Loch (44) Mittel (46) zur Zugentlastung der jeweiligen Leitung (22) aufweist.

11. Verfahren zur Herstellung einer Vorrichtung nach einem der vorangehenden Ansprüche, wobei der Rahmen (14) aus einem thermoplastischen Material, insbesondere aus Polypropylen, und die mindestens eine Trennwand (28) sowie gegebenenfalls die Dichtung (34) und/oder die Stopfen (38) aus einem thermoplastischen Elastomer in einem Arbeitsgang durch Zweikomponenten-Spritzgießen hergestellt werden.

## Claims

1. Device to cover and/or seal a wall aperture determined for feeding through at least one line (22), having a rigid frame (14) which is able to be fastened to the edge of the wall aperture, said frame having at least one frame opening (20) for feeding through a line (22), wherein a partition wall (28) made from elastomer material is arranged on and/or in the at least one frame opening (20), said partition wall being determined to enclose a line (22) fed through the relevant frame opening (20) in a circle, wherein the at least one partition wall (28) closes the respective frame opening (20) completely, and wherein the at least one partition wall (28) has a central region (30) of smaller thickness which is surrounded by an outer region (32) of greater thickness, **characterised in that** the frame (14) and the partition wall (28) are connected to each other firmly; the central region (30) has a thickness which is smaller than the thickness of the outer region (32) by at least 0.1 mm and preferably by at least 0.2 mm; and the at least one partition wall (28) has a thickness of a maximum of 1.5 mm, preferably of a maximum of 1.2 mm.

2. Device according to Claim 1, **characterised in that** the frame (14) has several frame openings (20) for feeding through a line (22) respectively, in which frame openings a partition wall (28) made from elastomer material is arranged respectively, said partition wall being determined to enclose a line (22) fed through the respective frame opening (20) in a circle, and being connected firmly to the frame (14).

3. Device according to Claim 1 or 2, **characterised in that** the frame (14) is produced from a thermoplastic plastic and the at least one partition wall (28) is produced from a thermoplastic elastomer; and the at least one partition wall (28) and the frame (14) are connected to each other by means of a two-component injection moulding method.

4. Device according to one of the preceding claims, **characterised in that** the central region (30) is adapted in its size to a line (22) to be fed through such that the diameter of the line (22) is slightly greater than the diameter of the central region (30).

5. Device according to one of the preceding claims, **characterised in that** the frame (14) is provided with a circumferential seal (34) on its side (16) determined to abut onto the edge of the wall aperture, said seal being produced from a thermoplastic elastomer and being connected firmly to the frame (14).

6. Device according to one of the preceding claims, **characterised in that** the frame (14) has screw holes (36) for the feeding through of fastening screws (37); and the screw holes (36) are closed by means of a plug (38) respectively that is connected firmly to the frame (14).

7. Device according to Claim 3, according to Claim 5 and according to Claim 6, **characterised in that** the at least one partition wall (28), the seal (34) and the plugs (38) are produced from the same thermoplastic elastomer and are connected to the frame (14) by means of the two-component injection moulding method respectively.

8. Device according to Claim 6 or 7, **characterised in that** the plugs (38) have a smaller thickness than the frame (14) in the region of the screw holes (36) and are arranged at a distance to the side (16) determined to abut onto the edge of the wall aperture.

9. Device according to Claim 8, **characterised in that** a grub screw (40) projecting from the frame (14) on the side (16) determined to abut onto the edge of the wall aperture is screwed into each screw hole (36) to the maximum extent to abut onto the respective plug (38).

10. Device according to one of the preceding claims, **characterised in that** a perforated plate (42) is fastened to the frame (14), wherein a hole (44) of the plate (42) determined for feeding through a line (22) is arranged over each frame opening (20) respectively, and wherein the plate (42) has means (46) for strain relief of the respective line (22) at each hole (44).

11. Method for producing a device according to any one of the preceding claims, wherein the frame (14) is produced from a thermoplastic material, in particular from polypropylene, and the at least one partition wall (28) as well as potentially the seal (34) and/or the plugs (38) are produced from a thermoplastic elastomer, and the frame, the partition wall and potentially the seal and/or the plugs are produced in a work procedure by two-component injection moulding.

## Revendications

1. Dispositif pour recouvrir et/ou calfeutrer une traversée murale destinée au passage d'au moins une ligne (22), avec un cadre rigide (14) qui peut être fixé sur le bord de la traversée murale et qui présente au moins une ouverture de cadre (20) pour le passage d'une ligne (22), sachant qu'une cloison séparatrice (28) en matériau élastomère est disposée sur et/ou dans l'ouverture de cadre (20) au moins unique, cloison qui est destinée à entourer annulairement une ligne (22) passée à travers l'ouverture de cadre concernée (20), sachant que la cloison séparatrice (28) au moins unique ferme complètement l'ouverture de cadre respective (20), et sachant que la cloison séparatrice (28) au moins unique présente une région centrale (30) de plus petite épaisseur qui est entourée par une région extérieure (32) de plus grande épaisseur, **caractérisé en ce que** le cadre (14) et la cloison séparatrice (28) sont mutuellement assemblés par liaison de matière, **en ce que** la région centrale (30) présente une épaisseur inférieure d'au moins 0,1 mm et de préférence d'au moins 0,2 mm à celle de la région extérieure (32), et **en ce que** la cloison séparatrice (28) au moins unique présente une épaisseur de 1,5 mm maximum, de préférence de 1,2 mm maximum.

2. Dispositif selon la revendication 1, **caractérisé en ce que** le cadre (14) présente plusieurs ouvertures de cadre (20), chacune pour le passage d'une ligne (22), dans chacune desquelles est disposée une cloison séparatrice (28) en matériau élastomère qui est destinée à entourer annulairement une ligne (22) passée à travers l'ouverture de cadre respective (20), et qui est assemblée au cadre (14) par liaison de matière.

3. Dispositif selon la revendication 1 ou 2, **caractérisé en ce que** le cadre (14) est réalisé en une matière synthétique thermoplastique et la cloison séparatrice (28) au moins unique en un élastomère thermoplastique, et **en ce que** la cloison séparatrice (28) au moins unique et le cadre (14) sont mutuellement assemblés au moyen d'un procédé de moulage par injection à deux composants.

4. Dispositif selon l'une des revendications précédentes, **caractérisé en ce que** la région centrale (30) est d'une taille adaptée à une ligne (22) à faire passer de telle sorte que le diamètre de la ligne (22) est légèrement supérieur au diamètre de la région centrale (30).

5. Dispositif selon l'une des revendications précédentes, **caractérisé en ce que** le cadre (14) est pourvu, sur son côté (16) destiné à l'application contre le bord de la traversée murale, d'un joint d'étanchéité entourant (34) qui est fabriqué en un élastomère thermoplastique et qui est assemblé au cadre (14) par liaison de matière.

6. Dispositif selon l'une des revendications précédentes, **caractérisé en ce que** le cadre (14) présente des trous de vis (36) pour le passage de vis de fixation (37), et **en ce que** les trous de vis (36) sont chacun fermés au moyen d'un bouchon (38) assemblé au cadre (14) par liaison de matière.

7. Dispositif selon la revendication 3, selon la revendication 5 et selon la revendication 6, **caractérisé en ce que** la cloison séparatrice (28) au moins unique, le joint d'étanchéité (34) et les bouchons (38) sont fabriqués dans le même élastomère thermoplastique et sont respectivement assemblés au cadre (14) au moyen du procédé de moulage par injection à deux composants.

8. Dispositif selon la revendication 6 ou 7, **caractérisé en ce que** les bouchons (38) présentent une plus petite épaisseur que le cadre (14) dans la région des trous de vis (36) et sont disposés à distance du côté (16) destiné à l'application contre le bord de la traversée murale.

9. Dispositif selon la revendication 8, **caractérisé en ce qu'**une vis sans tête (40) dépassant du cadre (14) sur le côté (16) destiné à l'application contre le bord de la traversée murale est vissée dans chaque trou de vis (36) au maximum jusqu'en application contre le bouchon respectif (38).

10. Dispositif selon l'une des revendications précédentes, **caractérisé en ce qu'**une plaque à trous (42) est fixée sur le cadre (14), sachant qu'un trou respectif (44) de la plaque (42), destiné au passage d'une ligne (22), est disposé au-dessus de chaque ouverture de cadre (20), et sachant que la plaque (42) présente à chaque trou (44) des moyens (46) pour la décharge de traction de la ligne respective (22).

11. Procédé de fabrication d'un dispositif selon l'une des revendications précédentes, sachant que le cadre (14) est fabriqué en un matériau thermoplastique, en particulier en polypropylène et que la cloison séparatrice (28) au moins unique ainsi que le cas échéant le joint d'étanchéité (34) et/ou les bouchons (38) sont fabriqués en un élastomère thermoplastique, en une opération par moulage par injection à deux composants.
